# EUROPÄISCHE PATENTSCHRIFT

(11) **EP 1 866 066 B1**
(45) Veröffentlichungstag und Bekanntmachung des Hinweises auf die Patenterteilung: **09.12.2009**
(21) Anmeldenummer: 06723640.6
(22) Anmeldetag: 23.03.2006
(51) Int. Cl.: B01F 13/00, B01F 13/10, B01J 19/00

(54) **Mischersystem, Reaktor und Reaktorsystem**
Mixer system, reactor and reactor system
Système melangeur, reacteur et systéme reacteur

(30) Priorität: 05.04.2005 DE 102005015433
(43) Veröffentlichungstag der Anmeldung: 19.12.2007
(73) Patentinhaber: Karlsruher Institut für Technologie, 76131 Karlsruhe (DE)
(72) Erfinder: SCHUBERT, Klaus, 76227 Karlsruhe (DE); KRAUT, Manfred, 76351 Linkenheim-Hochstetten (DE); BOHN, Lothar, 76707 Hambrücken (DE); WENKA, Achim, 75196 Remchingen (DE)
(86) Internationale Anmeldenummer: PCT/EP2006/002648
(87) Internationale Veröffentlichungsnummer: WO 2006/105870

(56) Entgegenhaltungen:
- EP-A- 1 473 077
- DE-A1- 10 333 922

## Beschreibung

Die Erfindung betrifft ein Mischersystem zur Vermischung von mindestens zwei Fluiden gemäß Anspruch 1. Ferner umfasst die Erfindung einen Reaktor und ein Reaktorsystem umfassend das genannte Mischersystem gemäß der Ansprüche 12 bzw. 16. Bei dem genannten Mischersystem handelt es sich um ein statisches Mischersystem, d.h. es umfasst außer den zu vermischenden Fluidfraktionen keine bewegten Teile.

In einem Mischersystem der eingangs genannten Art werden die zu mischenden Fluide - jedes getrennt für sich - in mehrere Fluidstromfäden aufgeteilt, die alle gemeinsam über die Zuführungen geführt über die Einmündungen in Mischkammern münden. Durch die so erreichte, eng benachbarte Anordnung von einzelnen Mikrostromfäden der beiden oder mehreren Fluidfraktionen wird auf kurzem Weg und in sehr kurze Zeit eine effektive Vermischung erzielt.

Aus der DE 44 16 343 C2 ist beispielhaft ein Mischer mit einer Mischkammer und einem vorgeschalteten Führungsbauteil für die getrennte Zufuhr von zu mischenden Fluiden zu einer Mischkammer bekannt, wobei das Führungsbauteil mit Ausdehnungen im Millimeterbereich aus mehreren, übereinander geschichteten Folien mit einer jeweiligen Dicke von ca. 100 µm Dicke zusammengesetzt ist, in die die Kanäle als Mikrostrukturen eingearbeitet sind. Die Kanäle einer Folie umfassen Zuführungen für nur eine der beiden Fluidfraktionen. In einer Ausführungsform mündet die Mischkammer direkt in die Mikrokanäle eines anschließenden Wärmetauschers oder Mikroreaktors.

Ein ähnlicher Vermischer, bei dem bei sonst gleichem Aufbau und Funktionsprinzip die Zuführungskanäle von für zwei zu mischenden oder zu dispergierenden Fluiden bogenförmig verlaufend parallel zueinander in die Mischkammer ausmünden, wird in DE 195 40 292 C1 beschrieben. Durch diese Anordnung verspricht man sich eine über den gesamten Ausströmquerschnitt gleichmäßig hohe und schnelle Vermischung in der Mischkammer. Die Führungskanäle haben einen gleich bleibenden Querschnitt mit Breiten kleiner 250 µm, die Folien, in denen die Kanalstrukturen eingearbeitet werden, eine Dicke von ca. 100 µm.

Auch in der DE 101 23 093 A1 wird ein statischer Mikrovermischer zum Mischen mindestens zweier Fluide offenbart, umfassend mehrere übereinander geschichtete strukturierte Folien. Die Mischkammer wird jedoch durch einen kreisförmigen Durchbruch in einer Folie gebildet, wobei die Einmündungen der beiden Fluide auf derselben Folie eingearbeitet in abwechselnder Reihenfolge in einer Ebene über die gesamte Mischkammerhöhe über die zylinderförmige Wandung der Mischkammer angeordnet sind. In der Mischkammer entsteht während der Vermischung eine zweidimensionale spiralförmige Strömung, die in eine mittig um die Symmetrieachse der Mischkammer angeordneten Bohrung auf einer Stirnfläche der Mischkammer (gebildet eine die Mischkammer begrenzenden Folienfläche) ausmündet.

Eine ähnliche Mischapparatur zur Vermischung von mindestens zwei Fluiden mit spiralförmiger Strömungsführung wird auch in der WO 02/089966 A2 beschrieben. Hier werden die Fluide jedoch in separaten Mischern in den Zuleitungen vor Eintritt in die Mischkammer zusätzlich gemischt.

Eine spiralförmige Strömungsführung der vorgenannten Art ist jedoch naturgemäß mit einer Strömungsverengung verbunden, die einen ausgeprägten Strömungswidersand bewirkt, den möglichen Durchsatz signifikant begrenzt oder eine zunehmende Strömungsgeschwindigkeit bewirkt.

Auch die US 5.573.334 offenbart einen statischen Mischer für zwei Fluidfraktionen, umfassend eine zylinderförmige Mischkammer mit zwei Endbereichen, wobei je eine Einmündung pro Fluidfraktion sowie eine gemeinsame Ausmündung in je einem der Endbereiche positioniert sind. Auch hier in die Ausmündung durch eine konzentrische Bohrung im Boden der zylinderförmigen Mischkammer realisiert - grundsätzlich verbunden mit den vorgenannten Auswirkungen.

Durch eine Miniaturisierung wird eine spezifisch hohe Vermischungsfläche zwischen den zu vermischenden Fluiden durch Aufteilung der Fluide in Mikrostromfäden erzielt, womit zwar eine schnelle und vollständige Vermischung erfolgt, jedoch bei einem vergleichsweise geringen Fluiddurchsatz. Andererseits wird mit jeder Dimensionsvergrößerung zwar der mögliche Fluiddurchsatz erhöht, jedoch verbunden mit einer Absenkung der spezifischen Vermischungsfläche zwischen den zu vermischenden Fluiden. Eine einfache Anhebung von feinen Einleitungskanälen in eine Mischkammer bei den vorgenannten Mischer führt jedoch in praktischen Versuchen aufgrund der nicht zu vermeidenden Fertigungsungenauigkeiten, Verstopfungen und Strömungsinhomogenitäten in den einzelnen Fluidzuführungskanälen zu der Gefahr einer nicht homogenen Einleitung der zu vermischenden Fluidfraktionen in die Mischkammer.

Soll ein Mischersystem der vorgenannten Art zur Erzeugung eines reaktives Fluidgemisches herangezogen werden, das nach der Vermischung für eine anschließende chemische Reaktion in ein Reaktorvolumen einzuleiten ist, ist eine sofortige und dabei homogene Vermischung besonders wichtig. Dabei ist es zwingend erforderlich, das homogene Gemisch für die anschließende kontrollierte chemische Reaktion in sehr kurzer Zeit in das Reaktionsvolumen zu überführen, und zwar bevor es zu einer Rückvermischung oder einem vorzeitigen Reaktionsbeginn kommt.

Die EP 1 473 077 A2 offenbart beispielhaft ein Mischersystem gemäß dem Obergriff des Anspruchs 1 zur Vermischung von mindestens zwei Fluiden, umfassend mehrere gleichartige und fluidisch parallel geschaltete Mikrovermischer, die in eine Führungsmatrix integriert und in diesem über Zuleitungen für die zu vermischenden Fluide fluidisch angeschlossen sind.

Davon ausgehend besteht die **Aufgabe der Erfindung** also darin, ein Mischersystem der gattungsgemäßen Bauart mit einer verbesserten Vermischungseffizienz und gleichzeitig einem erhöhten Fluiddurchsatz bei gleichem oder geringerem Druckverlust vorzuschlagen. Ferner liegt die Aufgabe in der Schaffung eines Reaktors und eines Reaktorsystems unter Verwendung des vorgenannten Mischersystems, welche sich einerseits durch eine kompakte Bauform und andererseits durch einen erhöhten Durchsatz und geringen Druckverlust für durchlaufende Fluide und Reaktionsprodukte auszeichnet, wobei die ablaufende Reaktion in einem hohen Maße steuer- und kontrollierbar ist.

Diese Aufgabe wird durch die Merkmale in Anspruch 1, 12 und 16 gelöst; die hierauf bezogenen Unteransprüche beinhalten vorteilhafte Ausführungsformen dieser Lösungen.

Die Aufgabe wird durch ein Mischersystem zur Vermischung von mindetens zwei Fluiden gelöst, welches mehrere gleichartige und fluidisch parallel geschaltete Mikrovermischer umfasst, die in eine Führungsmatrix integriert und in diesem über Zuleitungen für die zu vermischenden Fluide fluidisch angeschlossen sind. Eine Unterteilung in mehrere Mischkammern verringert die Gefahr von Rückvermischung und weisen im Vergleich zu einer Mischkammer eine grundsätzlich höhere spezifische Wandungsfläche auf, die bereits für eine Temperierung bereits unmittelbar bei und nach der Vermischung des Fluidgemisches nutzbar gemacht werden kann. Vor Einleitung der Fluide in die Mischkammern der Mikrovermischer werden sie fraktionsweise in eine Vielzahl von Mikrostromfäden aufgeteilt und möglichst mit Bezug auf die Fluidfraktion in abwechselnder Reihenfolge in die Mischkammern der Mikrovermischer eingeleitet. Mit abnehmenden Querschnittsabmessungen der einzelnen Fluidstromfäden werden zunehmend große spezifische Kontaktflächen zwischen den unterschiedlichen Fluidfraktionen erzielt, was eine Vermischung der einzelnen Fluidfraktionen erheblich beschleunigt. Die genannten Mikrovermischer garantieren damit in vorteilhafter Weise eine besonders schnelle vollständige und damit wirkungsvolle Vermischung der Fluide bei gleichzeitig geringen Bauvolumen. Eine fluidische Parallelschaltung einer Vielzahl von Mikrovermischern erhöht zudem den Fluiddurchsatz.

Es bietet sich an, die zu vermischenden mindestens zwei Fluidfraktionen über jeweils eine einzige Anschlussleitung in das Mischersystem einzuleiten und durch Zuleitungen in einer Führungsmatrix im Mischersystem auf die einzelnen, vorzugsweise identischen Mikrovermischer aufzuteilen. Die Zuleitungen in der Führungsmatrix sind dabei so zu gestalten, dass am Eintritt in jeden der Mikrovermischer identische Stömungs- und Druckverhältnisse in den zugeführten Fluiden vorliegen. Dies ist vorzugsweise durch eine möglichst maximale Aufweitung der Zuleitungen zwischen Anschluss und Mikrovermischer realisierbar, was in vorteilhafter Weise sowohl die Fluidgeschwindigkeit als auch den Fluidwiderstand lokal reduziert, Grundvoraussetzung für identische Fluidverhältnisse an allen Mikrovermischern.

Die Erfindung umfasst aber grundsätzlich auch Ausführungsformen in der Form eines fluiddurchlässigen und in einer Richtung durchströmbaren Mischersystems, eingesetzt zwischen zwei Fluidvolumina oder zwei Reaktionsvolumina, beispielsweise eine flächige Trennwand oder Barriere zwischen den beiden Volumina oder ein anderes Zumischsystem. Dabei durchdringt die Strömung das System, indem sie in die Mikrovermischer auch über mehrere Anschlüsse (z.B. pro Mikrovermischer) eingeleitet wird und dort mit einer zweiten Substanz, beispielsweise einer Chemikalie vermischt wird. Die einzumischende Substanz wird über Verteilerkanalstrukturen (Zuleitungen) zu den grundsätzlich über das gesamte System (z.B. Trennwand) positionierbaren Mikrovermischern geleitet. Ein vorgeschalteter Filter wie z.B. eine plan stromaufwärts auf der Trennwand anliegende Filterfolie (Filter werden auch allgemein Mischersystemen mit Fluidkanalquerschnitten im Mikrometerbereich vorgeschaltet) verhindert ein Eindringen von Verunreinigungen und damit eine Verstopfung einzelner Mikrovermischer. Durch diese Ausführung lassen sich beispielsweise auch größere Strömungsquerschnitte mit Substanzen homogen dotieren, ohne dass es zu ungewollten zeitlich und lokal auftretenden Überkonzentrationen in dem abstromseitigen Fluidvolumen kommt.

Das Mischersystem arbeitet optimal, wenn alle in diesem integrierten und parallel geschalteten Mikrovermischer das gleiche Mischergebnis erzielen. Verstopfungen oder Fertigungsungenauigkeiten verändern unmittelbar den Querschnitt vor allem der Mikrostromfäden vor Eintritt in die Mischkammern und damit direkt das Mischverhältnis der zu vermischenden Fluide in den jeweils betroffenen Mikrovermischern.

Um ein gleich bleibendes Mischverhältnis in allen Mikrovermischern zu gewährleisten wird im Rahmen einer bevorzugten Ausführung ein modularer Aufbau des Mischersystems vorgeschlagen. Dadurch lässt sich jedes einzelne Modul nicht nur im Rahmen des Herstellprozess oder anschließend bei der Qualitätskontrolle (z.B. Sicht- oder Funktionskontrolle) prüfen und klassifzieren (z.B. nach Mischeffizienz oder Druckverlust), sondern auch im Rahmen einer Revision des Mischersystems nach einem Ausbau separat überprüfen und ggf. ersetzen. Vorzugsweise werden die einzelnen Mikrovermischer jeweils als separate und identische Module gestaltet und werden als austauschbare Einsätze formschlüssig in der Führungsmatrix vorgesehen.

Die Führungsmatrix wiederum umfasst jeweils für die Fluide getrennte Verteilerstrukturen (z.B. Zuleitungen in der Führungsmatrix) auf, die gleiche Druckverhältnisse an den Zuführungen zu jedem Mikrovermische sicherstellen müssen. Vorzugweise umfassen diese Verteilerstrukturen das vorgenannte zusammenhängende erweiterte Volumen unmittelbar vor allen Zuleitungen zu den Mischkammern in den Mikrovermischern. Eine derartige Erweiterung des Strömungsquerschnitts der Zuleitungen, grundsätzlich aber auch der den Ausmündungen der Mikrovermischer fluidisch anschließenden Bereiche, bewirkt die vorgenannte Absenkung der Fließgeschwindigkeit und damit des Stromungswiderstands, wodurch an allen, vorzugsweise identischen Mikrovermischern in vorteilhafter Weise gleiche Druckverhältnisse vorliegen.

Bei der Umsetzung der vorgenannten Gestaltungsgrundsätze ist es vorteilhaft, die Mikrovermischer jeweils als separate Einsätze formschlüssig in die Führungsmatrix des Mischersystems einzusetzen, wobei die Zuleitungen und Ableitungen für die Fluide bzw. Fluidmischungen die Außenflächen an verschiedenen Bereichen der Einsätze und jeweils dichtend zueinander durchdringen. Aufgrund der Größe der Mikrovermischer ist es vorteilhaft, die Einsätze von zylinderförmiger Gestalt mit je einer Mantelfläche und zwei Stirnflächen zu gestalten, wobei die Zuleitungen für die Fluide die Mantelfläche und/oder eine der beiden Stirnflächen sowie mindestens eine Ausmündung die jeweils andere Stirnfläche oder die Mantelfläche durchdringen. Allein der formschlüssige Sitz dieser Einsätze in der Führungsmatrix gewährleistet den vorgenannten dichtenden Fluidanschluss, wobei dieser Effekt durch eine enstprechnede Materialpaarung optimierbar ist (z.B. durch Gestaltung der Führungsmatrix, des Einsatzes oder einer separaten Zwischenlage aus einem Dichtungsmaterial wie PTFE).

Alle Mikrovermischer sowie die Einsätze sind vorzugsweise identisch in ihrem Aufbau und Abmessungen. Sie sind in vorteilhafter Weise einzeln auch empirisch in Mischertests (z.B. in einer speziellen Prüfeinrichtung) prüfbar und je nach Ergebnis auch nach bestimmten Eigenschaften wie Mischereffizienz oder Strömungswiderstand etc. einteilbar. Auf diese Weise lässt sich z.B. sicherstellen, dass alle in eine Führungsmatrix eingesetzten Mikrovermischereinsätze nicht nur geometrisch, sondern auch funktionell im Rahmen einer vorgebaren Toleranz identisch sind. Identische Einsätze weisen im vorliegenden Fall auch weitere Vorteile auf, die sich aufgrund einer einheitlichen Fertigung (Serie) wie auch hinsichtlich der Lagerhaltung (wenige unterschiedliche Teile) für Mikrovermischereinsätze ergeben.

Ferner wird ein Reaktor vorgeschlagen, bei dem das vorgenannte Mischersystem mindestens einem Reaktorvolumen vorgeschaltet ist. Mehrere Reaktorvolumina können dabei hintereinander und / oder parallel verschaltet werden, wobei im Rahmen eines Reaktorsystems weitere vorgenannte Mischersysteme zur Einmischung eines weiteren Fluids oder zur Homogenisierung der Reaktionsprodukte zwischen zwei oder mehreren Reaktionsvolumina zwischengeschaltet werden können. Hierbei werden einzelne oder alle Zuleitungen des Mischersystems direkt an die Ausgänge des Reaktorvolumens angeschlossen. Allein durch den Einsatz der parallel verschalteten Mikrovermischer lassen sich in vorteilhafter Weise die Verweilzeiten einer gleichmäßig durchmischten homogenen Fluidmischung zwischen den Ausmündungen des Mischersystems und dem Eintritt in das Reaktorvolumen auch für größere Mengenströme wirksam einstellen (z.B. nach oben und/oder unten begrenzen).

Als weitere Mittel zur Einstellen dieser Verweilzeit werden vorzugsweise strömungsoptimierte Verdrängungskörper zwischen Ausmündung und Reaktorvolumen vorgeschlagen, welche das für die Verweilzeit zur Verfügung stehende Volumen exakt einstellen und damit die Fluidmischung direkt in das Reaktorvolumen weiterleiten. Dies erschwert nicht nur mögliche Rückver- und Entmischungen in der Fluidmischung, sondern begrenzt auch ungewollte Reaktionen bereits vor dem Einleiten in das Reaktorvolumen. Insbesondere bei schnell reagierenden Fluidmischungen bietet es sich an, den Bereich um die Verdrängungskörper zu Temperieren (z.B. durch Temperiermittel wie Kühlmedien in Mikrokanälen), strömungsgünstig zu gestalten (durch Fluidführungen) oder durch katalytische Materialien (Unterdrückung oder Beschleunigung bestimmter chemischer Reaktionen, auch selektiv) zu beeinflussen.

Die Erfindung sowie Details dieser werden beispielhaft anhand von Ausführungsformen und folgenden Figuren näher erläutert. Es zeigen
**Fig. 1a** **und b** eine Ausführungsform des Mischersystems, aufgebaut als Folien- oder Plattenverbund, in Explosionsdarstellung aus zwei Perspektiven (oben und unten),
**Fig.2a** **bis c** prinzipielle Schnittdarstellungen von drei weiteren Ausführungsformen des Mischersystems,
**Fig.3a** **bis c** Schnittdarstellungen der Mikrovermischer als zylinderförmige Einsätze, prinzipiell einsetzbar in dargestellten Ausführungsformen gemäß **Fig.2b** **und c,**
**Fig.4a** **und b** die prinzipielle Seiten- und Draufsicht der Grundkomponenten eines Mikrovermischers,
**Fig.5** die perspektivische Ansicht eines Mikrovermischers in Schichtbauweise,
**Fig.6** eine perspektivische Detailansicht der Einmündungen in die Mischkammer mit zylindrischer Wandung eines Mikrovermischers gemäß **Fig.5****,**
**Fig.7** die Aufsichten mehrerer Folien eines Mikrovermischers gemäß **Fig.5 und 6****,**
**Fig.8a** **und b** eine prinzipielle Darstellung eines Reaktors mit einem Mischersystem in perspektivischer Ansicht bzw. Teilschnittdarstellung,
**Fig.9** eine Ansicht einer Ausführungsform eines Reaktors mit mehreren hintereinander angeordneten Reaktionsvolumina,
**Fig.10** eine perspektivische Explosionsdarstellung des Reaktors gemäß **Fig.9** sowie
**Fig. 11** eine Schnittdarstellung eines Reaktors als Folienverbund und gekühlten Auslassbereichen aus den Mischkammern.

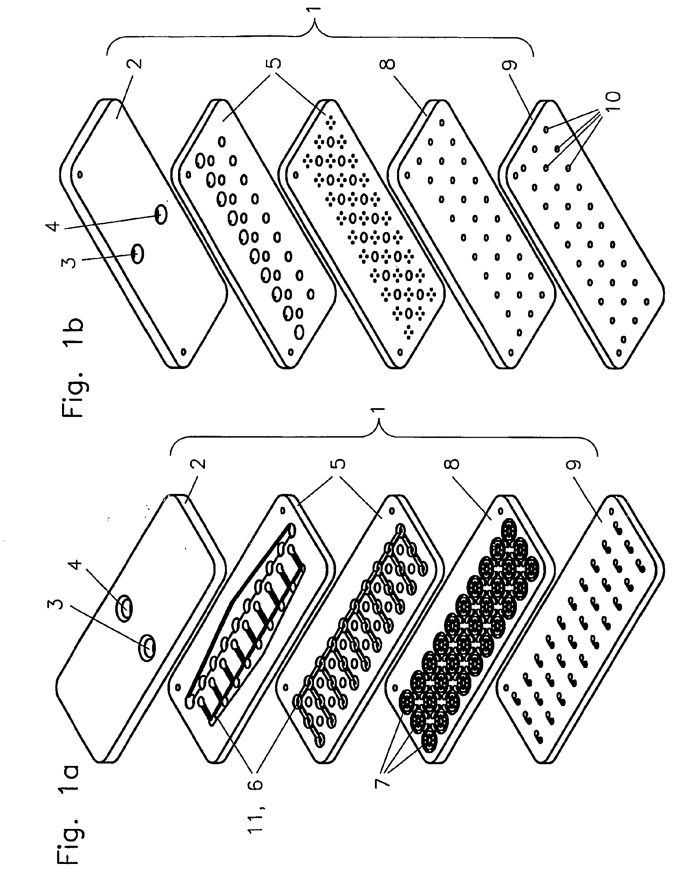

Eine erste Ausführungsform eines Mischersystems repräsentiert **Fig. 1a** und **b.** Sie besteht aus einem Folienverbund **1** (oder Plattenverbund) als Führungsmatrix, der in zwei Perspektiven als Explosionszeichnungen dargestellt ist. Der Folienverbund **1** umfasst eine Deckfolie **2** mit je einem Anschlüsse **3** und **4** für die Fluide A bzw. **B,** zwei Zuleitungsfolien **5** mit dreidimensionalen Zuleitungsstrukturen **6** von den Anschlüssen zu den Mikrovermischer **7,** auf der Mischerfolie **8,** sowie einer Ableitungsfolie **9** mit Ausmündungen **10** in der genannten Reihenfolge. Alle Folien (oder Platten) lassen sich einzeln vor einem Zusammensetzen im Rahmen einer Qualitätskontrolle optisch untersuchen. Die genannten Folien bzw. Platten sind aus einem zu den Fluiden sowie den Reaktions- und Mischprodukten chemisch beständigen Material gefertigt und werden vor einem Einbau in hier ein nicht dargestelltes Gehäuse miteinander verbunden (z.B. chemisch und physikalisch beständige Verklebung, Diffusionsverschweißung oder Pressung im Gehäuse etc.). Da nicht alle genannten Folien (oder Platten) mit allen Fluiden und Produkten aus diesen in Verbindung kommen, können in einem Mischersystem auch unterschiedliche Folienmaterialien zum Einsatz kommen. Als Material eignet sich besonders Chrom-Nickel-Stähle, chemisch beständige Kunststoffe oder Gläser, welche sich mechanisch (spangebend oder prägend), elektroerosiv oder chemisch (ätzen) sehr fein strukturieren lassen.

Ausdrücklich umfassen in Bezug auf die Erfindung die genannten Folien und Folienverbünde (Folienstapel) stets auch Platten oder Bleche bzw. Platten- oder Blechverbünde wie auch andere sich flächig erstreckende Komponenten oder Komponentenverbünde, auch wenn diese nicht explizit in der Anmeldung genannt sind.

Bei einem Zusammensetzen des System bietet es sich an, zunächst nur die Mischerfolie **8** und die an diese angrenzenden Folien zu einem Folienteilverbund zu montieren, um die dadurch funktionstüchtigen Mikrovermischer **7** auf dem Folienteilverbund im Rahmen einer Qualitätskontrolle einzeln auszutesten, ein nicht zu unterschätzender Vorteil dieser Bauform. Allerdings ist bei einem defekten Mikrovermischer u.U. der gesamte Folienteilverbund unbrauchbar. Ferner lässt sich der so geprüfte Folienteilverbund durch iterative Ergänzung weiterer Folien Schritt für Schritt fertig stellen, wobei zwischen jede: Teilschritt eine empirische Teilüberprüfung (automatisiert oder manuell) möglich ist. Die Ausführungsform zeichnet sich dadurch aus, dass sich eine große Anzahl von Mikrovermischern in der Führungsmatrix besonders eng aneinander integrieren lassen, und zwar im Falle einer parallelen wie z.B. chemischen (ätzenden) Strukturierung der Folien ohne einen Fertigungsmehraufwand.

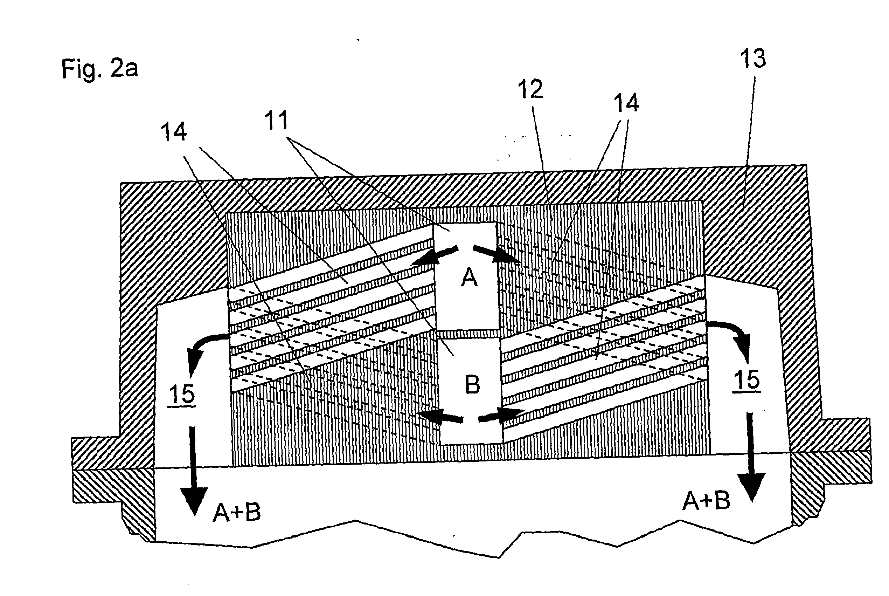

**Fig.2a** bis **c** offenbaren alternative Ausführungsformen des Mischersystems. In allen drei Figuren sind die Fließrichtungen der Fluide **A** und **B** sowie des Fluidgemisches **A+B** durch Pfeile dargestellt.

**Fig.2a** zeigt eine Ausführungsform mit zwei orthogonal zu den Schnittebenen orientierten Zuleitungen **11** für die Fluide **A** und **B** im Führungsbauteil **12** in einem Gehäuse **13.** Von diesen Zuleitungen führen beidseitig eine Vielzahl von Mikrokanälen **14** V-förmig zu zwei Mischkammern **15** beidseitig des Führungsbauteils, in denen sich die Fluidmischung **A+B** zusammenmischen (zwei Mikrovermischer). Vorzugsweise besteht das Führungsbauteil aus einem Folienverbund, wobei die Einzelfolien parallel zu der Schnittebene angeordnet jeweils abwechselnd die Mikrokanäle für eine Fluidfraktion pro Seite aufweisen. Durch eine optionale nicht dargestellte mittige Teilung des Führungsbauteils ließen sich die die Mikrovermischer für jede Seite einzeln austauschen. Die Mikrokanäle **14** sind im dargestellten Beispiel gerade ausgeführt, wobei diese jedoch alle im Rahmen der vorgenannten Stands der Technik auch als gekrümmte oder anders ausgeformte (z.B trichterförmige) Kanäle ausführbar sind.

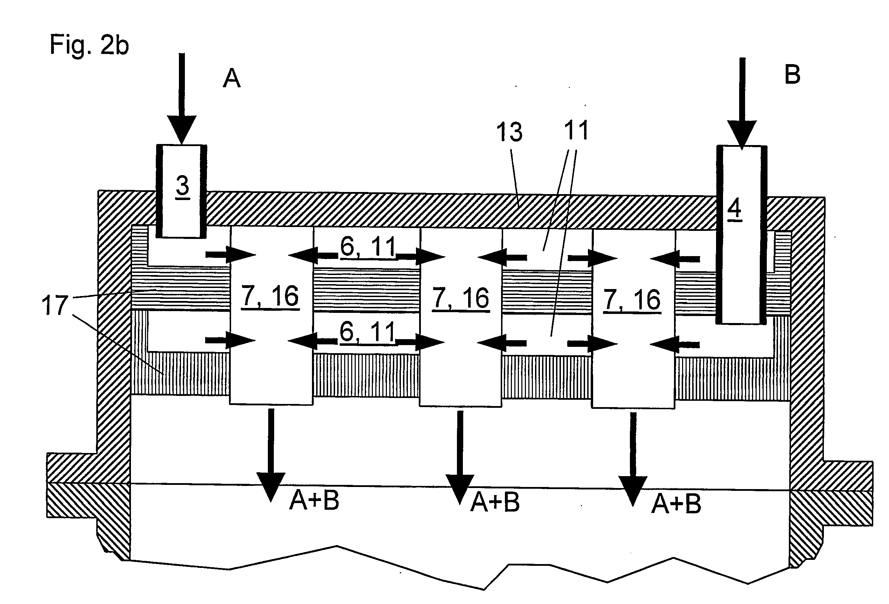

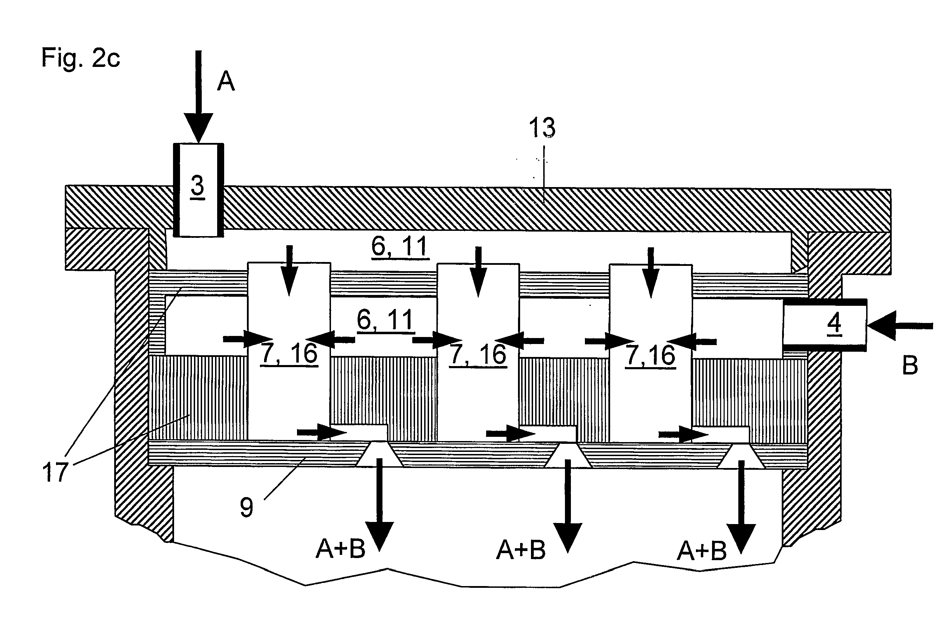

**Fig.2b** **und c** zeigen dagegen Ausführungen mit individuell austauschbaren vorzugsweise zylinderförmigen Mikrovermischereinsätzen **16,** eingesetzt in formschlüssigen Aussparungen in einer aus gestapelten Folien **17** (oder Platten) aufgebauten Führungsmatrix im Gehäuse **13** mit Anschlüssen 3 und **4** für die Fluide **A** bzw. **B.** In den Folien sind jeweils Zuleitungsstrukturen **6,** umfassend die Zuleitungen **11,** d.h. Kanalstrukturen zwischen den Anschlüssen und den Mikrovermischereinsätzen, eingearbeitet. Die Mikrovermischereinsätze werden je nach Ausführungsform von unten **(****Fig.2b****)** oder von oben **(****Fig.2c****)** in die Führungsmatrix eingeschoben, wobei insbesondere bei der in **Fig.2b** dargestellten Variante eine Arretierung der Einsätze in der Führungsmatrix durch entsprechende, nicht dargestellte Mittel (z.B. Haltegitter, Pressung etc.) gewährleistet ist.

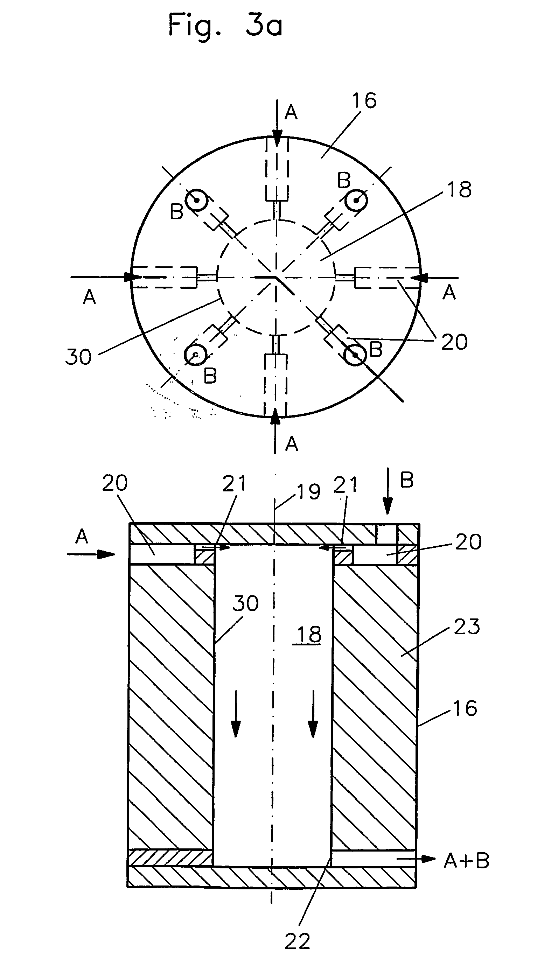

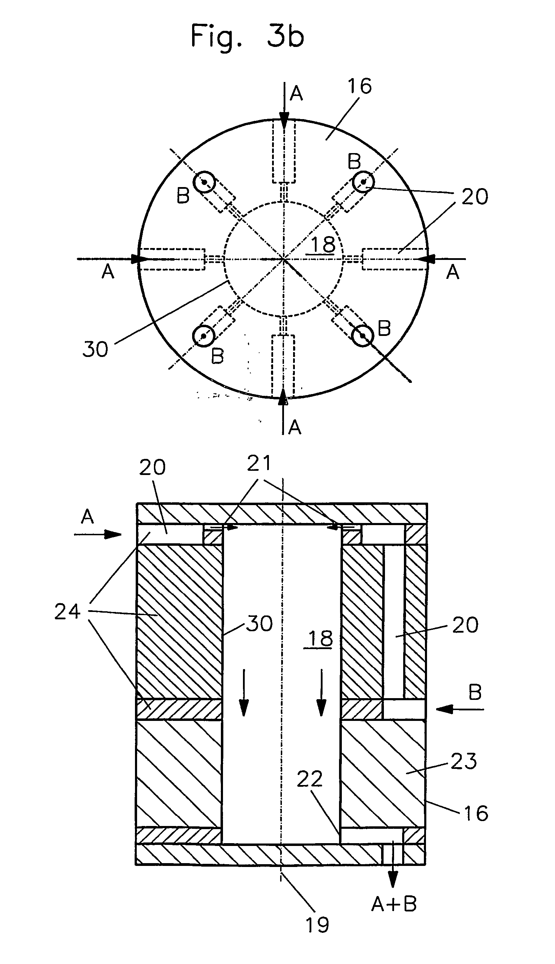

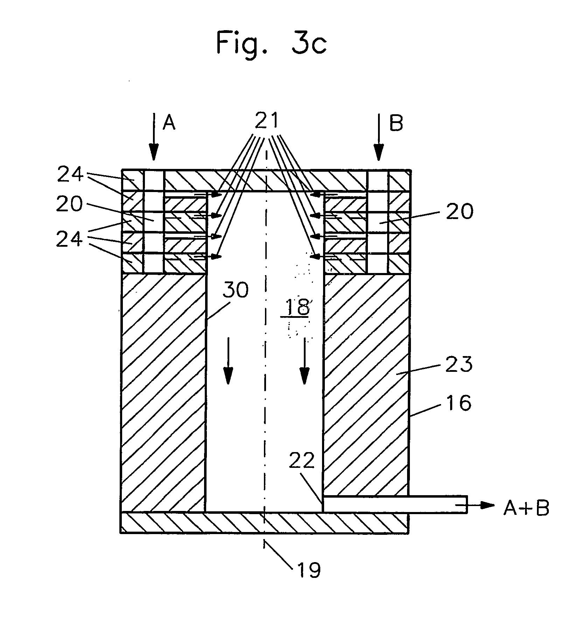

Die vorgenannten Mikrovermischereinsätze enthalten je eine Mischkammer mit Zuführungen für die Fluide **A** und **B** sowie Ausmündungen für die Fluidmischung **A+B.** Diese durchdringen jeweils einen definierten Bereich der Mantelfläche und/oder der Stirnflächen der Mikrovermischereinsätze (vgl. Pfeile in **Fig.2b** und c). **Fig.2c** zeigt zudem beispielhaft tangentiale Ausmündungen aus der Mischkammer (vgl. **Fig.3a** **und c),** welche sich in Kanalstrukturen in den angrenzenden Folien und der Ableitungsfolie **9** (gleichzeitig Anschlag für die Mikrovermischereinsätze) optional mit veränderlichem Querschnitt fortsetzen.

Die Mikrovermischereinsätze, im Detail dargestellt in verschiedenen Ausführungsformen in **Fig.3a** **bis c,** aber auch die Mikrovermischer gemäß der Ausführungsform in **Fig.1a** **und b** umfassen vorzugsweise je eine rotationssymmetrische Mischkammer **18** mit einer Symmetrieachse **19** und zwei Endbereichen, eine Anzahl von Zuführungen **20** für zwei oder mehreren zu mischende oder zu dispergierende Fluide **(A** und **B)** mit je mindestens einer Einmündung **21** in die Mischkammer sowie mindestens eine Ausmündung **22** aus der Mischkammer. Alle Einmündungen **21** befinden sich ausschließlich in einem der beiden Endbereiche, während die Ausmündungen **22** im anderen Endbereich positioniert sind. Vorzugsweise sind die Einmündungen der Fluidfraktionen über dem Umfang der Mantelfläche der Mischkammer **18,** d.h. nicht auf der Stirnfläche in abwechselnder Reihenfolge in einer oder mehreren Ebene angeordnet. Die dargestellten Mikrovermischer sind oder umfassen axiale Schichtverbünde. Andere Bauarten, beispielsweise konzentrisch ineinander angeordnete strukturierte Rohre sind denkbar.

Eine Ausführungsform dieser Mikrovermischer umfasst eine Anordnung von Einmündungen der Fluidfraktionen in die Mischkammer, und zwar in abwechselnder Reihenfolge. Die abwechselnde Reihenfolge der Einmündungen und damit der in die Mischkammer einströmenden Fluidstromfäde stellt damit eine hohe spezifische Vermischungsfläche zwischen den zu mischenden oder dispergierenden Fluidfraktionen in der Mischkammer sicher. Bei Anordnung der Einmündungen in mehreren Ebenen und bei einem zusätzlichen Versatz der Einmündungen in einer Ebene zu denen in der jeweils benachbarten Ebene, erhält man eine weitgehende, möglichst vollständige Ummantelung der Fluidstromfäden einer Fluidfraktion durch Fluidstromfäden der jeweils anderen Fraktion.

Ein wesentliches Merkmal der vorgenannten Mikrovermischereinsätze umfasst eine nicht konzentrische Anordnung der Ausmündung in der Mischkammer. Vorzugsweise sind die Ausmündungen im außen liegenden Bereich der Mischkammer, vorzugsweise der Mantelfläche angeordnet. Somit sind von der Fluidmischung die vorgenannten möglichen Zentrifugalkräfte, die der Strömung entgegenwirken nicht in der Höhe, wie im Stand der Technik zu erwarten, zu überwinden. Ein sich bei rotationssymmetrischen Mischkammern gemäß des Stands der Technik einstellende und eine turbulente Vermischung fördernde Staudruck wird hier ebenfalls gezielt reduziert. Grundsätzlich ist der Staudruck bei der Erfindung auch nicht erforderlich, da die Vermischung in vorgenannter Weise im Bereich der laminaren Fluidstromfäden in ausreichender Weise erfolgt.

Turbulente Strömungsanteile verbessern zwar grundsätzlich die Effinzienz einer Durchmischung oder Dispergierung der Fluidstromfäden in der Mischkammer, verursachen allerdings auch größere, bei bestimmten, insbesondere reaktiven Vermischungsvorgängen unbedingt zu vermeidenden Verweilzeitunterschiede der Fluidmischungen in der Mischkammer. Durch eine Vermeidung oder Reduzierung von turbulenter Strömung sinken in vorteilhafter Weise auch die vorgenannten Verweilzeitunterschiede, insbesondere im Vergleich zu den Vorrichtungen gemäß des Stands der Technik.

Sind die Einmündungen einer Ebene zu denen in der jeweils benachbarten Ebene um jeweils eine Einmündung versetzt angeordnet, erhält man eine Einbettung der in die Mischkammer einströmenden Fluidstromfäden in jeweils eine oder mehrere andere Fluidfraktionen. Idealerweise grenzt jeder der Fluidstromfäden vollständig, d.h. an allen Seiten an Fluidstromfäden einer anderen Fluidfraktion, womit eine größtmögliche spezifische Vermischungsfläche zwischen den Fluidfraktionen und in Folge dessen eine weitere Verbesserung der Vermischungseffizienz erzielbar ist. Bei der Vermischung oder Dispergierung von zwei Fluidfraktionen entsteht idealer weise eine Anordnung der einzelnen Einmündungsquerschnitte ähnlich einer Schachbrettanordnung.

Die Ausrichtung der Einmündungen zur Mischkammerwandung, d.h. der Einstrahlungswinkel der Fluidstromfäden erfolgt zwischen 0° (parallel zur Mischkammerwandung) und 90° (orthogonal zu der Mischkammerwandung) vorzugsweise zugunsten einer laminaren Strömung parallel zueinander in Richtung des oder der Auslässe. Vorzugsweise sind die Einmündungen zur Erzeugung einer bevorzugten wendelförmigen Fluidführung in der Mischkammer tangential vorzugsweise mit einem geringen Steigungswinkel zu der als Wandung dienenden Mantelfläche der Mischkammer angeordnet.

Konstruktiv wird die Aufgabe dadurch gelöst, dass die Ebenen durch gestapelte Folien mit Rillen als Fluidführungen gebildet sind, wobei die Zuführungen pro Fluidfraktion über Fluidkanäle, umfassend übereinander liegende Durchbrüche in den Folien, fluidisch miteinander verbunden sind. Die übereinander liegenden Durchbrüche bilden im Folienstapel die Fluidkanäle, von denen sich die Fluidführungen zur Mischkammer abzweigen. Die Fluidanschlüsse an die Fluidkanäle sind vorzugsweise auf der jeweils begrenzenden äußeren Deckfolie aufgesetzt. Alternativ ist eine Zuführung auch über Kanäle auf einer oder mehreren Folien realisierbar, wobei vorzugsweise die jeweils begrenzenden äußeren Deckfolien dichtend die Fluidkanäle abdecken.

Der vorgenannte geringe Steigungswinkel der Einmündungen erzielt man beispielsweise durch eine Gestaltung der Folien ganz oder nur im Bereich der Einmündungen, d.h. unmittelbar in an der Wandung der Mischkammer als Kegelstumpfmantelflächen. Dies ist beispielsweise über eine Kaltumformung der Einzelfolien oder des Folienstapels vor der Verbindung der Folien untereinander zum Führungsbauteil z.B. über ein Diffusionsschweißen realisierbar.

Es bietet sich ferner an, die Fluidkanäle mit entsprechenden Mitteln für Messungen wie z.B. einem Thermoelement oder für eine Temperierung oder eine Druckmessung wie z.B. mit einem Heizelement oder einem fluidischen Wärmtauscher auszustatten und entsprechend zu dimensionieren, wodurch sich die die Fluidfraktionen in vorteilhafter Weise unmittelbar vor Eintritt in die Fluidführungen individuell konfektionieren lassen.

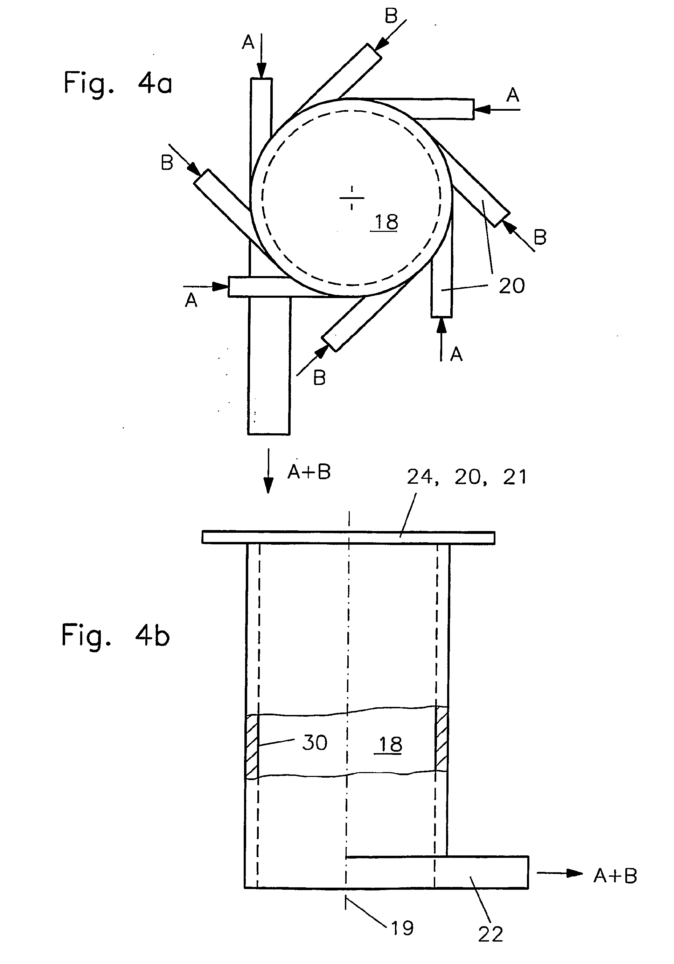

Den Grundaufbau der vorgenannten Ausführungsform eines Mikrovermischers zeigen **Fig.4a** und **b** schematisch für die Vermischung von zwei Fluidfraktionen **A** und **B** mit einer zylinderförmigen Mischkammer **18** im Mischkammergehäuse **23.** Dargestellt ist ferner die prinzipielle Anordnung des Führungsbauteils **24** mit Zuführungen **20** und Einmündungen **21** am oberen Ende und Ausmündung **22** am unteren Ende des Mischkammergehäuses **23.** Zuführungen und Einmündungen sind über den Mantelflächenumfang des einen Mischkammerendes in einer Ebene angeordnet, und zwar in Bezug auf die Fluide **A** und **B** in abwechselnder Reihenfolge. Das Führungsbauteil **24** ist dichtend auf ein Mischkammergehäuse **23** aufgesetzt, -geklebt oder -geschweißt. Vorzugsweise ist die Symmetrieachse orthogonal zu den Ebenen, die durch die Folien gebildet werden ausgerichtet.

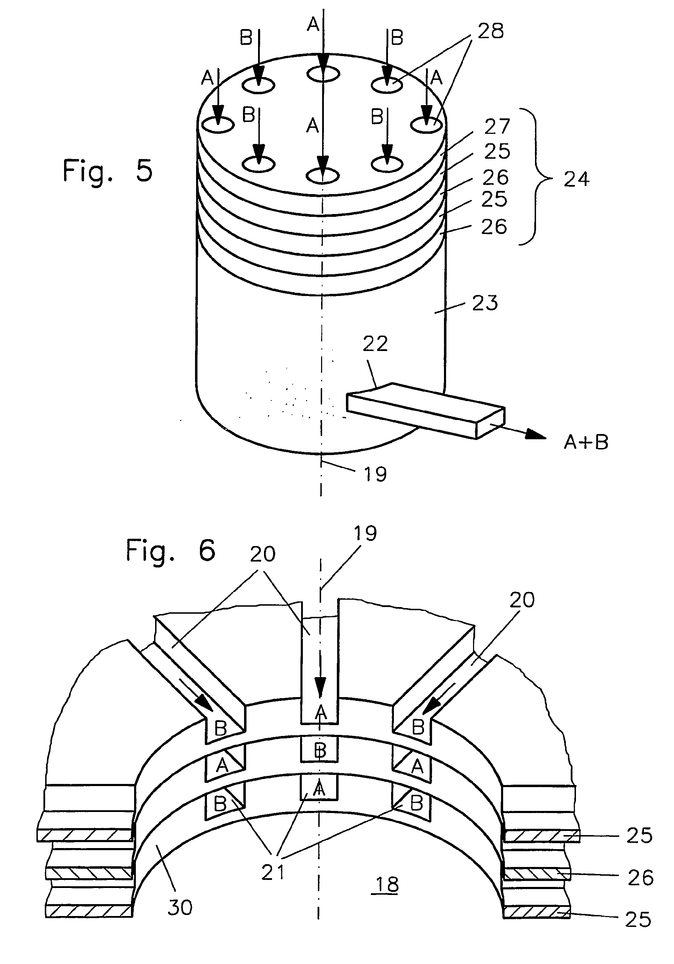

Eine alternative Ausführungsform des Mikrovermischers geben **Fig. 5** bis 7 wieder. Sie unterscheidet sich durch die erste Ausführungsform gem. **Fig.4** im Wesentlichen durch die Anordnung der Einmündungen und Zuführungen in mehreren Ebenen. Beide Ausführungsformen zeichnen sich durch eine um eine Symmetrieachse **19** rotationssymmetrische vorzugsweise zylinderförmige Mischkammer **18** mit zwei Endbereichen aus.

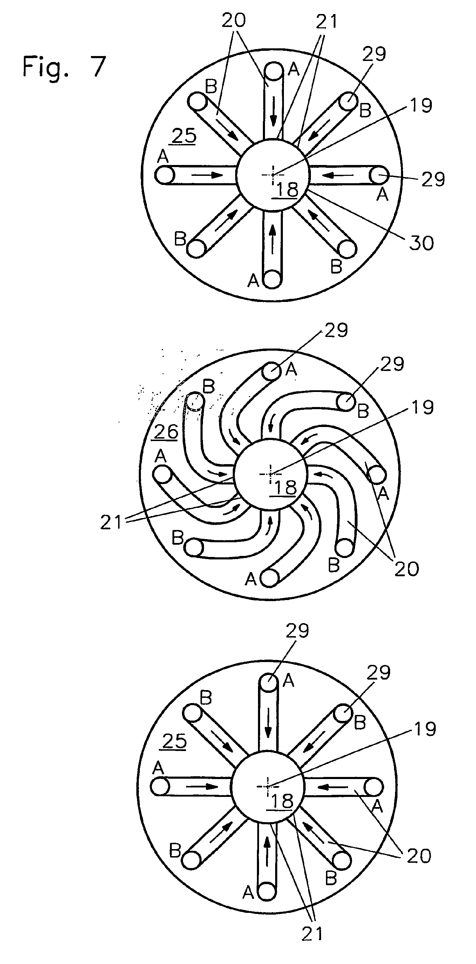

Beide vorgenannten Ausführungsformen sind grundsätzlich ähnlich aufgebaut. Dieser Aufbau wird anhand der zweiten Ausführungsform wie folgt näher erläutert (vgl. **Fig. 5** bis **7****).** Die Ausführungsformen umfassen ein Führungsbauteil **24,** vorzugsweise bestehend aus einer Anzahl von aufeinander gas- und druckdicht miteinander verbundener (z.B. über einen Diffusionsschweißprozess), abwechselnd gestapelter Folien **25** und **26** (erste Folie **25** und zweite Folie **26)** zwischen einer als Mischkammerabschluss (Mischkammerende) dienende Deckfolie **27** und einem Mischkammergehäuse **23.** Jede Ebene wird durch eine der Folien **25** oder **26** gebildet, d.h. die erste Ausführungsform umfasst nur eine Folie **25** oder **26** (in **Fig.1** nicht explizit dargestellt). Auf den Folien **25** und **26** sind die Zuführungen **20** und die Einmündungen **21** als Kanalstrukturen eingearbeitet (vorzugsweise spangebend, erosiv oder chemisch ätzend). Die Deckfolien weisen Anschlussöffnungen **28** für die vorgenannten, in **Fig.4** bis **7** aber nicht weiter dargestellte Fluidanschlüsse auf. Die Anschlussöffnungen schließen sich im Führungsbauteil an die vorgenannten Fluidkanäle an, welche sich durch eine Anzahl übereinander deckungsgleich angeordneter Durchbrüche **29** in den Folien im Folienstapel bilden (vgl. **Fig.7****).** Durch diese Anschlussöffnungen erfolgt eine Einleitung der Fluide **A** und **B** in die Fluidkanäle (dargestellt in **Fig.5** durch Pfeile auf der Deckfolie **27)** und von dort in die Zuführungen **20,** um das Führungsbauteil über Einmündungen **21** in die Mischkammer zu verlassen. Die Fläche des Führungsbauteils **24** im Bereich der Einmündungen **21** bildet dabei die ebene Wandung **30** der Mischkammer.

**Fig.7** zeigt anhand Detailansichten die Folien **25** und **26** mit den Durchbrüchen **29,** sowie die Kanalstrukturen, umfassend die Zuführungen **20** und die Einmündungen **21** im Bereich der Wandung **30.** Im Rahmen dieser Ausführungsform mündet je Folie nur eine Zuführung **20** aus jeden Durchbruch **29** aus, wobei die Durchbrüche die Fluidkanäle für die Fluide **A** und **B** in abwechselnder Reihenfolge bilden. Jede Folie bildet somit eine Ebene mit Einmündungen der Fluide **A** und **B** in abwechselnder Reihenfolge. Andererseits sind die Kanalstrukturen von Folie **25** und **26** nicht deckungsgleich, sondern weisen versetzt zueinander angeordnete Einmündungen **21** und Zuführungen **20** auf. Sind die Einmündungen der ersten Folien **25** und der zweiten Folien **26** um jeweils eine Einmündung versetzt, erhält man das in **Fig.6** dargestellte Schachbrettmuster der Einmündungen **21** der Fluide **A** und **B,** wobei die Einmündungen im Winkel von 90° zur Wandung **30** orientiert sind (vgl. **Fig.7****).**

Idealerweise sind die Einmündungen **21** der Fluide **A** und B zugunsten einer laminaren Vermischung der vorgenannten Fluidstromfäden aber in der Mischkammer parallel zueinander orientiert (vgl. **Fig.5****).** Dabei bieten sich Grundsätzlich Winkel größer 0° vorzugsweise zwischen **45** und 90° an.

Ein ungleicher Winkel und damit ein Überkreuzen der Fluidstromfäden sind dagegen grundsätzlich anzustreben, wenn eine gezielte Einstellung eines turbulenten Strömungszustands unmittelbar an den Einmündungen angestrebt wird. Der Winkelunterschied liegt dabei bevorzugt oberhalb 10°. Liegt er oberhalb von 90°, kommt es zu einem Gegeneinanderströmen der Fluidstromfäden und damit wiederum zu einem erhöhten Staudruck.

Die Folien **25** und **26** und damit die Einmündungen (vgl. **Fig.5** und **6****)** und die Ausmündungen **22** (vgl. **Fig.5****)** befinden sich in je einem dieser Endbereiche, wobei das vorgenannte Führungsbauteil **24** das eine Ende der rotationssymmetrischen Mischkammer **18** vollständig umschließt. Analog zu den in **Fig.5** dargestellten Folien **25** und **26** weisen die dargestellten Zuführungen **20** auf der zweiten Folie **26** einen Versatz zu den Durchbrüchen **29** auf, womit sich die Einmündungen **21** an der Mischkammerwandung **30** bei abwechselnder Reihenfolge der Folien **25** und **26** und bei einer um je eine Einmündung pro Ebene (Folie) versetzter Anordnung der Einmündungen gemäß eines Schachbrettmusters anordnen (vgl. **Fig.6** **und** **7****).**

In der dargestellten Form sind die Einmündungen zur Symmetrieachse hin ausgerichtet und bilden mit dieser jeweils einen rechten Winkel. Alternativ lassen sich die Einmündungen windschief zu der Symmetrieachse anordnen, womit man in einer rotationssymmetrischen Mischkammer eine Strömungsrichtung, vorzugsweise eine wendelförmige insbesondere im außen liegenden Bereich der Mischkammer, vorgibt. Dabei kann es vorteilhaft sein, die Mischkammer als Ringspaltvolumen zu gestalten und/oder die Ausmündungen in Strömungsrichtung anzuordnen.

Die Ausmündungen sind außerhalb der Symmetrieachse angeordnet. Eine möglichst gleichartige geometrische Ausrichtung aller Einmündungen in ihrer Anordnung zu der Symmetrieachse für beide der Fluidfraktionen begünstigt eine laminare Vermischung der Fluidstromfäden in vorgenannter Weise.

Optional lassen sich Komponenten des statischen Mikrovermischers temperieren, d.h. heizen oder kühlen, wie insbesondere den Bereich der Ausmündungen **22,** und der sich daran anschließenden Ableitungen, selektiv aber auch die Zuführungen und Einmündungen für eine Fluidfraktion. Bei einer Temperierung der Einmündungen lassen sich unerwünschte Auswirkungen von größeren Temperatur- und Druckgradienten, beispielsweise Kavitation oder Änderungen des Aggregatzustands, bei Eintritt von Fluidstromfäden der Fluide aus den Einmündungen in die Mischkammer reduzieren.

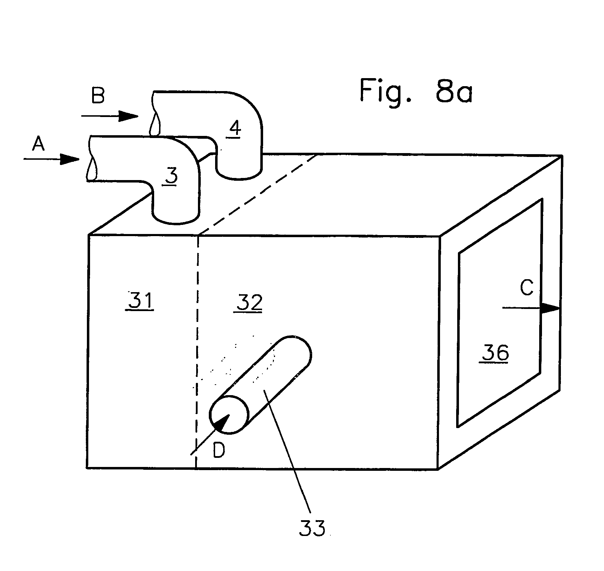

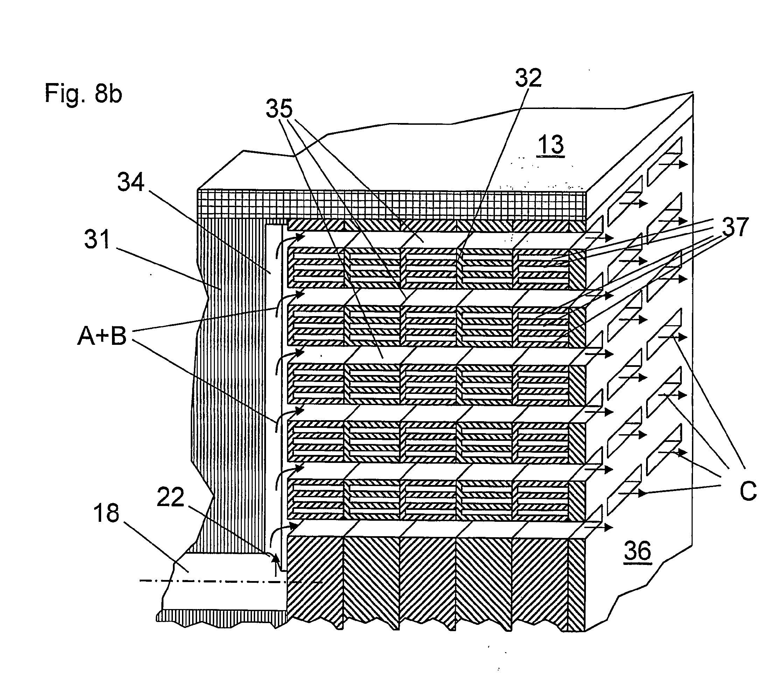

**Fig.8a** und **b** repräsentieren den grundlegenden Aufbau eines Reaktors. Dieser umfasst, wie in **Fig.8a** wiedergegeben, ein Mischersystem 31 mit den Anschlüssen **3** und **4** für die Fluide **A** bzw. **B** sowie eine dem Mischersystem fluidisch nachgeschalteten Reaktoreinheit **32.** Die Reaktoreinheit weist einen Zulauf **33** (vgl. **Fig.8a****)** und einen in **Fig.8a** und **b** nicht dargestellten Ablauf für ein Temperiermedium **D** (z.B. Kühlwasser) sowie einen Reaktionsvolumenaustrittsfläche **36** für das Reaktionsprodukt **C** für auf.

**Fig.8b** gibt eine die schematische perspektivische Teilschnittdarstellung wesentlicher Komponenten des Reaktors wieder. Die Fluide **A** und **B** werden nach einer Zuführung in das Mischersystem **31** zu der Fluidmischung **A+B** vermischt in die Reaktoreinheit **32** eingeleitet, in der die genannte Fluidmischung zum Reaktionsprodukt **C** chemisch reagiert. Die Fließrichtung von Fluidgemisch und Reaktionsprodukt von der Mischkammer **18** eines Mikrovermischers über eine Ausmündung **22** in einen Verteilungskanal **34** in die als Reaktionsvolumen dienenden Reaktionskanäle **35** zur Reaktionsvolumenaustrittsfläche 36 ist als eine Vielzahl von Pfeilen (beschriftet mit **A+B** und **C**) in **Fig.8b** wiedergegeben. In der Reaktionseinheit **32** werden die die Reaktionskanäle **35** umgebenden Wandungen durch Temperierungskanäle **37** für das Temperiermedium **D** durchdrungen, wodurch dieser Bereich entsprechend eines Kreuzstromwärmetauschers gestaltet ist. Die Reaktionskanäle **35** können je nach für die Reaktionskinetik erforderlichem Durchflussgeschwindigkeitsprofil einen mit dem Reaktionsfortschritt gleich bleibenden Querschnitt oder einen veränderlichen, d.h. erweiternden oder verjüngenden Querschnitt aufweisen. Auch Verzweigungen und Zusammenführungen der Reaktionskanäle sind bei bestimmten geometrischen, thermischen und/oder reaktionskinetischen Rahmenbedingungen sinnvoll.

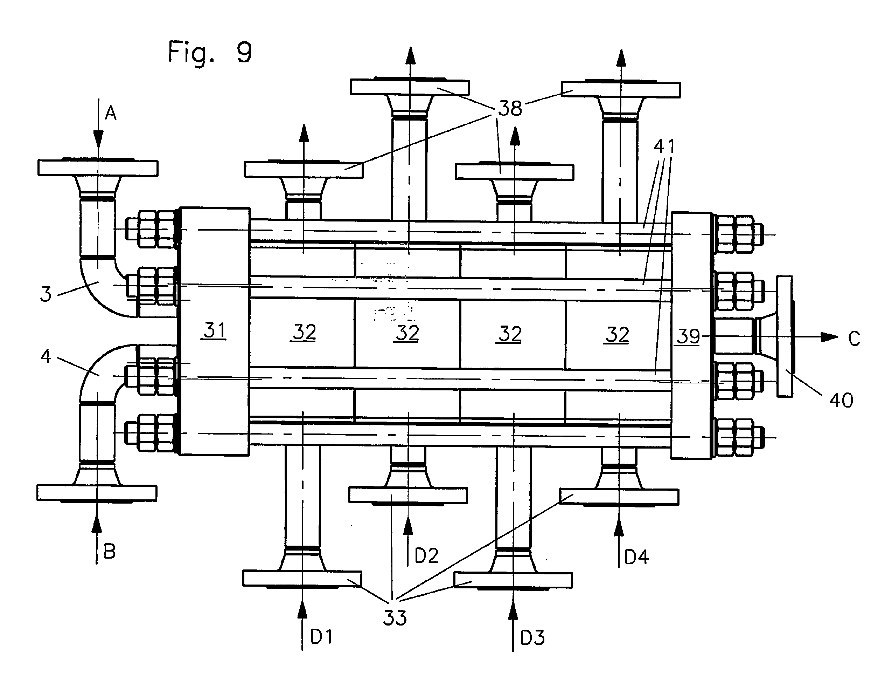

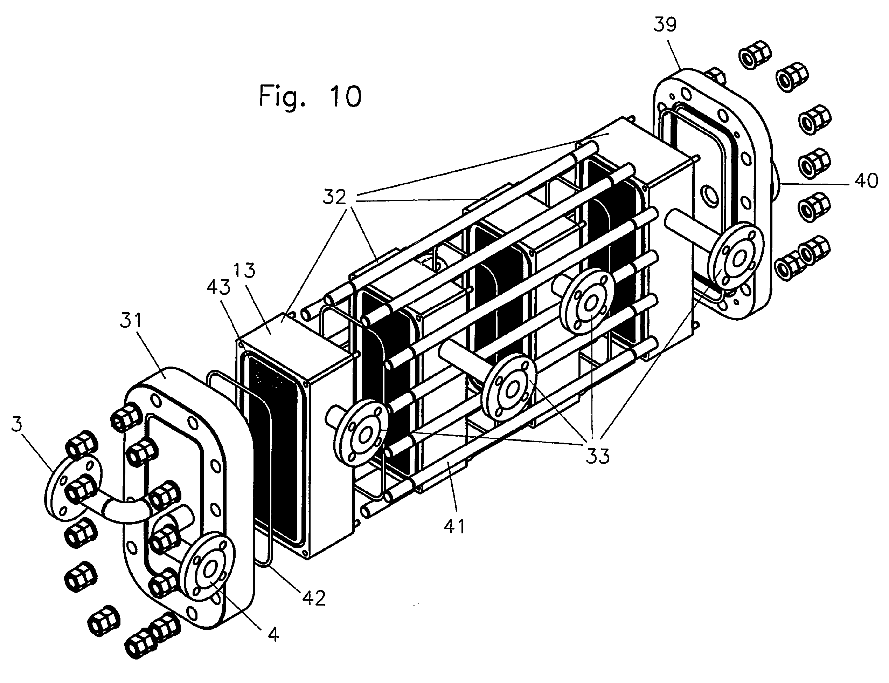

Eine konkrete Ausführungsform eines Reaktors zur Durchführung einer sog. Ritterreaktion aus den Ausgangsfluiden Schwefelsäure (Fluid **A)** und eine Organikmischung (Fluid **B)** ist in **Fig.9** **und** **10** wiedergegeben. Als Temperiermedium (Kühlmedium) wird Wasser (oder eine wässrige Lösung) mit einer Einlauftemperatur zwischen 5 und 100°C eingesetzt. Der Reaktor umfasst ein Mischersystem **31** mit Anschlüssen **3** und **4** für die Fluide **A** bzw. **B** und vier in Reihe nachgeschaltete Reaktionseinheiten **32** mit Zu- und Abläufen **33** bzw. **38** für je ein Temperiermedium **D1** bis **D4.** Der letzen Reaktionseinheit ist ein Abschlussmodul **39** mit einem Anschluss für das Reaktionsprodukt **C** nachgeschaltet. Reaktionseinheiten **32** und Mischersystem **31** umfassen in vorgenannter Weise je einen Stapel **43** strukturierter Metallbleche (1 mm Stärke), die miteinander diffusionsverschweißt und als Einsätze in je ein beidseitig offenes kastenförmiges Gehäuse **13** aus VA-Stahl fluiddicht eingesetzt sind. Die Kanalstrukturen zwischen den Temperierungskanälen im Stapel und den Zu- und Abläufen sind entweder gehäuseseitig oder im vorgenannten Stapel vorgesehen. Die Reaktoreinheiten **32** werden über Dehnschraubverbindungen **41** zwischen dem Mischersystem **31** und dem Abschlussmodul **39** verspannt, wobei zwischen den einzelnen Gehäusen **13** je eine Dichtung **42** vorzugsweise aus PTFE in Nuten im Gehäuse geführt, ein Austreten von beteiligten Fluiden verhindert.

In der genannten Ausführungsform sind optional und in **Fig.9** **und** **10** nicht dargestellte Mittel zur Einstellung der Verweilzeit einer Fluidmischung zwischen Ausmündungen des Mischersystems und dem Reaktorvolumen vorgesehen. Im einfachsten Fall bestehen diese Mittel aus einem plattenförmigen Einlegeteil als Verdrängungskörper, vorzugsweise aus PTFE, das bei der Montage einfach in den Zwischenraum zwischen Mischersystem **31** und erster Reaktoreinheit **32** eingelegt wird. Hierdurch wird das Volumen zwischen den beiden vorgenannten Komponenten reduziert und in Folge dessen die Verweilzeit der Fluidmischung **A+B** in Abhängigkeit der Größe des Einlegeteils in einem gewissen Rahmen einstellbar. Vorzugsweise weist das Einlegeteil Fluidführungen und/oder Fluidverteilungsstrukturen zwischen Ausmündungen und Reaktorvolumen auf. Ebenso lassen sich im Verdrängungskörper auch die vorgenannten Dichtungen **42** oder Führungen für die angrenzenden Komponenten integrieren. Ebenso sind die genannten Mittel grundsätzlich auch zur Einstellung der Verweilzeit zwischen zwei weiteren Komponenten, wie z.B. zwischen zwei Reaktoreinheiten einsetzbar.

Die vorgenannte Ausführungsform dient als Produktionsreaktor, somit ausgelegt, gebaut und geprüft in Übereinstimmung mit der Druckgeräterichtlinie 97/23 EG (Kategorie II, Fluidgruppe 1) nach dem Regelwerk AD 2000. Alle Anschlüsse **3, 4** und **39** sowie die genannten Zuund Abläufe **33** und **38** sind als Vorschweißflansche nach DIN 2633 DN25 PN16 ausgestaltet. Die Abmessungen (L x B x H) ohne Anschlüsse betragen 735 x 487 x 415 mm, die maximal zulässigen Druck für Fluide, Fluidgemisch und Reaktionsprodukt beträgt 16 bar, der zulässige Temperaturbereich zwischen 5 und 100°C. Im Rahmen vorgenannter Ritterreaktion wird mit einem Eintrittsdruck der Ausgangsfluide **A** und **B** von 4 bis 6 bar ein Druckverlust von 1 bis 2 bar angegeben.

Der Vorteil der Ausführungsform liegt im modularen Aufbau mit standarisierbaren Mischersystemen, Reaktoreinheiten und Abschlussmoduln, sowie in der besonders flexiblen Handhabung und Umrüstmöglichkeit mit Hilfe vorgenannter Dehnschraubverbindungen. Eine Aufnahme weiterer Komponenten, wie z.B. Zumischmodule oder Flüssigkeits- oder Gasabscheider ist durchaus denkbar und einfach umzusetzen.

Werden beispielsweise zwei Reaktoren fluidisch in der Weise hintereinander geschaltet, dass zumindest eine der Anschlüsse **3** oder **4** des nachgeschalteten Reaktors an den Anschluss **40** des vorgeschalteten Reaktors angeschlossen ist, entsteht ein Reaktorsystem. In diesem kann über einen noch nicht an einen vorgeschalteten Reaktor angeschlossenen Anschluss **3** oder **4** ein weiteres Fluid beigemischt werden; das betroffene Mischersystem dient somit als Zumischmodul. In der in **Fig.9** und **10** dargestellten Ausführungsform ist dies auch durch eine zusätzliche Zwischenschaltung eines Mischersystems mit geometrisch angepassten Anschlüssen **3** und **4** zwischen zwei der dargestellten Reaktionseinheiten technologisch realisierbar.

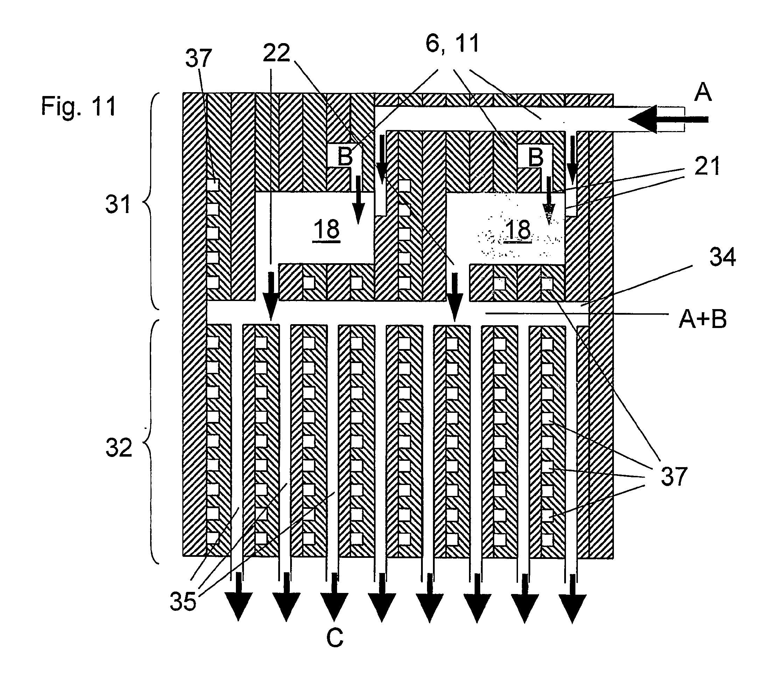

Eine weitere Ausführungsform eines in seiner Gesamtheit als Schichtverbund (Stapel) der vorgenannten Art aufgebauten Reaktors zeigt **Fig.11** in einer schematischen Schnittdarstellung. Von seinem Grundaufbau entspricht der Reaktor allen vorgenannten (vgl. Bezugszeichen), weist aber Kühlmittelkanäle **37** auf, deren Wirkung sich auch auf die Bereiche der Mischkammern **18,** der Zuleitungen **11,** Einmündungen **21** und der Ausmündungen **22** erstrecken. Sind derartige Erstreckungen selektiv nicht erwünscht, lassen sich (nicht dargestellte) Wärmebarrieren in Form von lokalen Schichtunterbrechungen in einer oder mehreren Schichtebenen realisieren. Der Vorteil dieses Reaktors liegt in der kompakten Bauweise, womit sich dieses System insbesondere für Verwendungen in der Mikroverfahrenstechnik prädestiniert.

Grundsätzlich eignet sich die Erfindung auch für die Vermischung von mehr als zwei Ausgangsfluide, wobei die Fluide entweder gleichzeitig oder nacheinander in eine Mischkammer geleitet werden oder die Fluidmischung erst durch in Reihe hintereinander geschaltete Vermischer erzeugt wird. Ferner ist auch eine Erzeugung von Zwischenreaktionsprodukten und Einleitung dieser in einen Zumischer oder in ein Mischersystem denkbar, wobei ein Reaktorsystem der vorgenannten Art zum Einsatz käme.

### Bezugszeichenliste

- 1: Folienverbund
- 2: Deckfolie
- 3: Anschluss Fluid A
- 4: Anschluss Fluid B
- 5: Zuleitungsfolien
- 6: Zuleitungstruktur
- 7: Mikrovermischer
- 8: Mischerfolie
- 9: Ableitungsfolie
- 10: Ausmündungen
- 11: Zuleitung
- 12: Führungsbauteil
- 13: Gehäuse
- 14: Mikrokanäle
- 15: Mischkammer
- 16: Mikrovermischereinsatz
- 17: Folien
- 18: Mischkammer
- 19: Symmetrieachse
- 20: Zuführung
- 21: Einmündung
- 22: Ausmündung
- 23: Mischkammergehäuse
- 24: Führungsbauteil
- 25: erste Folie
- 26: zweite Folie
- 27: Deckfolie
- 28: Anschlussöffnungen
- 29: Durchbrüche
- 30: Wandung
- 31: Mischersystem
- 32: Reaktoreinheit
- 33: Zulauf (für Temperiermedium)
- 34: Verteilungskanal
- 35: Reaktionskanal
- 36: Reaktionsvolumenaustrittsfläche
- 37: Temperierungskanal
- 38: Ablauf (für Temperiermedium)
- 39: Abschlussmodul
- 40: Anschluss für Reaktionsprodukt C
- 41: Dehnschraubverbindung
- 42: Dichtung
- 43: Stapel

## Patentansprüche

1. Mischersystem zur Vermischung von mindestens zwei Fluiden. (A und B), umfassend mehrere gleichartige und fluidisch parallel geschaltete Mikrovermischer (7), die in eine Führungsmatrix integriert und in diesem über Zuleitungen (11) für die zu vermischenden Fluide fluidisch angeschlossen sind, wobei die Mikrovermischer je eine Mischkammer (18) mit Zuführungen (20) für mindestens zwei zu mischende oder zu dispergierende Fluide mit je mindestens einer Einmündung (21) in die Mischkammer sowie mindestens eine Ausmündung (22) je Mischkammer umfassen,
wobei
a) die Einmündungen der Fluide in abwechselnder Reihenfolge in mindestens einer Ebene angeordnet sind sowie
b) die Mischkammern rotationssymmetrisch mit einer Symmetrieachse (19) und zwei Endbereichen gestaltet ist, wobei die Ausmündungen (22) und die Einmündungen (21) in je einem der Endbereiche positioniert sind,
**dadurch gekennzeichnet, dass**
c) die Ausmündungen (22) außerhalb der Symmetrieachse (19) angeordnet sind.

2. Mischersystem nach Anspruch 1, **dadurch gekennzeichnet, dass** die Mikrovermischer (7) als separate und einzeln austauschbare Mikrovermischereinsätze (16) formschlüssig in die Frührungsmatrix (17) einsetzbar sind.

3. Mischersystem nach Anspruch 2, **dadurch gekennzeichnet, dass** die Mikrovermischereinsätze (16) von zylinderförmiger Gestalt mit je einer Mantelfläche und zwei Stirnflächen sind,
wobei die Zuleitungen (11) für die Fluide die Mantelfläche und/oder eine der beiden Stirnflächen sowie mindestens eine Ausmündung (22) die jeweils andere Stirnfläche oder die Mantelfläche durchdringen.

4. Mischersystem nach einem der vorgenannten Ansprüche, **dadurch gekennzeichnet, dass** die Einmündungen (21) in mindestens zwei Ebenen angeordnet sind, wobei die Einmündungen einer Ebene zu denen in der jeweils benachbarte Ebene versetzt angeordnet sind.

5. Mischersystem nach einem der vorgenannten Ansprüche, **dadurch gekennzeichnet, dass** alle Einmündungen (21) je Fluidfraktion in einem Winkel zur Wandung (30) der Mischkammer (18) ausgerichtet sind, wobei dieser Winkel zwischen 0 und 90° liegt.

6. Mischersystem nach einem der vorgenannten Ansprüche, **dadurch gekennzeichnet, dass** die Ebenen durch gestapelte Folien mit Rillen als Fluidführungen gebildet sind, wobei die Zuführungen pro Fluidfraktion über Fluidkanäle, umfassend übereinander liegende Durchbrüche in den Folien, fluidisch miteinander verbunden sind.

7. Mischersystem nach einem der vorgenannten Ansprüche, **dadurch gekennzeichnet, dass** die Symmetrieachse (19) orthogonal zu den Ebenen ausgerichtet ist.

8. Mischersystem nach einem der vorgenannten Ansprüche, **dadurch gekennzeichnet, dass** die Einmündungen (21) windschief zu der Symmetrieachse (19) angeordnet sind.

9. Mischersystem nach einem der vorgenannten Ansprüche, **dadurch gekennzeichnet, dass** alle Einmündungen (21) in ihrer Anordnung zu der Symmetrieachse (19) für jede Fluidfraktion gleichartig ausgerichtet sind.

10. Mischersystem nach einem der vorgenannten Ansprüche, **dadurch gekennzeichnet, dass** die Einmündungen (21) in der Mischkammer (18) eine Strömungsrichtung vorgeben sowie die Ausmündungen (22) in ihrer Anordnung zu der Symmetrieachse gleichartig ausgerichtet sind.

11. Mischersystem nach einem der vorgenannten Ansprüche, **dadurch gekennzeichnet, dass** die Ausmündungen (22) in einer Strömungsrichtung ausgerichtet sind.

12. Reaktor, umfassend
a) ein Mischersystem (31) nach einem der vorgenannten Ansprüche sowie
b) mindestens ein an die Ausmündungen (22) des Mischersystems angeschlossenes Reaktorvolumen (35), wobei Mittel zur Einstellung der Verweilzeit einer Fluidmischung zwischen Ausmündungen des Mischersystems und dem Reaktorvolumen vorgesehen sind.

13. Reaktor nach Anspruch 12, **dadurch gekennzeichnet, dass** die Mittel mindestens einen Verdrängungskörper zwischen Ausmündungen und Reaktorvolumen umfassen.

14. Reaktor nach Anspruch 12 oder 13, **dadurch gekennzeichnet, dass** das Reaktorvolumen und/oder die Ausmündungen eine Temperierungsvorrichtung aufweist.

15. Reaktor nach Anspruch 14, **dadurch gekennzeichnet, dass** die Temperierungsvorrichtung eine Mikrokanalstruktur mit einem durchfließenden Temperiermedium umfasst.

16. Reaktorsystem, umfassend mindestens zwei fluidisch hintereinander geschaltete Reaktoren nach einem der Ansprüche 12 bis 15, wobei das Reaktorvolumen eines Reaktors an eine der Zuführungen des anderen Reaktors angeschlossen ist.

## Claims

1. Mixer system for mixing at least two fluids (A and B), said mixer system including a plurality of similar type micro mixers (7) that are fluidically connected in parallel, are incorporated into a guide matrix and are fluidically connected in said guide matrix by means of supply lines (11) for the fluids to be mixed, wherein the micro mixers each include a mixing chamber (18) with feeders (20) for at least two fluids to be mixed or dispersed, each feeder with at least one inlet (21) into the mixing chamber as well as at least one outlet (22) per mixing chamber, wherein
a) the inlets of the fluids are disposed in alternate order in at least one plane as well as
b) the mixing chambers are rotationally symmetrical with an axis of symmetry (19) and there are two end regions, wherein the outlets (22) and the inlets (21) are each positioned in one of the end regions, **characterized in that**
c) the outlets (22) are disposed outside the axis of symmetry (19).

2. Mixer system according to Claim 1, **characterized in that** the micro mixers (7) are insertable, as separate, individually exchangeable micro mixer inserts (16), in a positive locking manner into the guide matrix (17).

3. Mixer system according to Claim 2, **characterized in that** the micro mixer inserts (16) have a cylindrical shape each with an outer surface and two end faces, wherein the supply lines (11) for the fluids, the outer surface and/or one of the two end faces as well as at least one outlet (22) penetrate the respective other end face or the outer surface.

4. Mixer system according to one of the preceding Claims, **characterized in that** the inlets (21) are disposed in at least two planes, wherein the inlets of one plane are disposed offset relative to those in the respective adjacent planes.

5. Mixer system according to one of the preceding Claims, **characterized in that** all inlets (21) are aligned per fluid fraction at an angle to the wall (30) of the mixing chamber (18), wherein said angle is between 0 and 90°.

6. Mixer system according to one of the preceding Claims, **characterized in that** the planes are formed by stacked foils with grooves as fluid guides, wherein the feeders per fluid fraction are fluidically interconnected by means of fluid channels, comprising openings formed one above the other in the foils.

7. Mixer system according to one of the preceding Claims, **characterized in that** the axis of symmetry (19) is aligned orthogonally relative to the planes.

8. Mixer system according to one of the preceding Claims, **characterized in that** the inlets (21) are disposed in a skew manner relative to the axis of symmetry (19).

9. Mixer system according to one of the preceding Claims, **characterized in that** all inlets (21), in their disposition relative to the axis of symmetry (19), are aligned in the same manner for each fluid fraction.

10. Mixer system according to one of the preceding Claims, **characterized in that** the inlets (21) define a flow direction in the mixing chamber (18) and the outlets (22) are aligned in the same manner in their disposition relative to the axis of symmetry.

11. Mixer system according to one of the preceding Claims, **characterized in that** the outlets (22) are aligned in one flow direction.

12. Reactor, comprising
a) a mixer system (31) according to one of the preceding Claims and
b) at least one reactor volume (35) connected to the outlets (22) of the mixer system, wherein means are provided for adjusting the dwell time of a fluid mixture between outlets of the mixer system and the reactor volume.

13. Reactor according to Claim 12, **characterized in that** the means include at least one displacement body between the outlets and the reactor volume.

14. Reactor according to Claims 12 or 13, **characterized in that** the reactor volume and/or the outlets have a temperature controlling device.

15. Reactor according to Claim 14, **characterized in that** the temperature controlling device comprises a micro channel structure with a traversing temperature controlling medium.

16. Reactor system, comprising at least two reactors fluidically connected in series according to one of Claims 12 to 15, wherein the reactor volume of one reactor is connected to one of the feeders of the other reactor.

## Revendications

1. Système de mélangeur, pour mélanger au moins deux fluides (A et B) comprenant plusieurs micromélangeurs (7) de même type, branchés en parallèle du point de vue des fluides, intégrés dans une matrice de guidage, et raccordées fluidiquement par des conduites d'alimentation (11) fournissant les fluides à mélanger,
les micromélangeurs ayant chacun une chambre de mélange (18) munie d'entrées (20) pour au moins deux fluides à mélanger ou à disperser, avec au moins une entrée (21) par chambre de mélange et au moins une sortie (22) par chambre de mélange, système de mélangeur dans lequel
a) les entrées des fluides sont réparties dans une alternance de séries de rangées dans au moins un plan, et
b) les chambres de mélange sont symétriques en rotation avec un axe de symétrie (19) et deux zones d'extrémité,
les sorties (22) et les entrées (21) étant situées respectivement dans l'une des zones d'entrée,
**caractérisé en ce que**
c) les sorties (22) ne passent pas par l'axe de symétrie (19).

2. Système de mélangeur selon la revendication 1,
**caractérisé en ce que**
les micromélangeurs (7) sont logés en tant qu'inserts de micromélangeurs (16), distincts et remplaçables séparément, par une liaison par la forme dans la matrice de guidage (17).

3. Système de mélangeur selon la revendication 2,
**caractérisé en ce que**
les inserts de micromélangeurs (16) ont une forme cylindrique ayant une surface enveloppe et deux surfaces frontales,
les conduites d'alimentation (11) des fluides traversent la surface enveloppe et/ou l'une des deux surfaces frontales, et au moins une sortie (22) traverse respectivement l'autre surface frontale ou la surface enveloppe.

4. Système de mélangeur selon les revendications précédentes,
**caractérisé en ce que**
les entrées (21) sont réparties dans au moins deux plans, et
les entrées d'un plan sont décalées par rapport aux entrées du plan directement voisin.

5. Système de mélangeur selon les revendications précédentes,
**caractérisé en ce que**
toutes les entrées (21), par fraction de fluide, sont alignées suivant un angle par rapport à la paroi (30) de la chambre de mélange (18) et cet angle est compris entre 0° et 90°.

6. Système de mélangeur selon les revendications précédentes,
**caractérisé en ce que**
les plans sont formés par un empilage de films munis de nervures constituant des guides de fluide, les alimentations étant reliées de manière fluidique par fraction de fluide, par des canaux à fluide comprenant des passages superposés dans les films.

7. Système de mélangeur selon les revendications précédentes,
**caractérisé en ce que**
l'axe de symétrie (19) est perpendiculaire aux plans.

8. Système de mélangeur selon les revendications précédentes,
**caractérisé en ce que**
les entrées (21) sont inclinées par rapport à l'axe de symétrie (19).

9. Système de mélangeur selon les revendications précédentes,
**caractérisé en ce que**
toutes les entrées (21) sont alignées par rapport à l'axe de symétrie (19) de la même manière pour chaque fraction de fluide.

10. Système de mélangeur selon les revendications précédentes,
**caractérisé en ce que**
les entrées (21) sont alignées dans la chambre de mélange (18) selon une direction d'écoulement et les sorties (22) sont alignées de la même manière pour leur disposition vis-à-vis de l'axe de symétrie.

11. Système de mélangeur selon les revendications précédentes,
**caractérisé en ce que**
les sorties (22) sont alignées selon une direction d'écoulement.

12. Réacteur comprenant :
a) un système de mélangeur (31) selon les revendications précédentes, et
b) au moins un volume de réaction (35) raccordé aux sorties (22) du système de mélangeur,
des moyens étant prévus pour régler le temps de séjour d'un mélange de fluides entre les sorties du système de mélangeur et le volume de réaction.

13. Réacteur selon la revendication 12,
**caractérisé en ce que**
les moyens comprennent au moins un organe de refoulement entre les sorties et les volumes de réaction.

14. Réacteur selon la revendication 12 ou 13,
**caractérisé en ce que**
le volume de réaction et/ou les sorties, ont un dispositif de mise en température.

15. Réacteur selon la revendication 14,
**caractérisé en ce que**
le dispositif de mise en température comprend une structure de micro-canal traversée par un milieu de mise en température.

16. Système de réacteurs comprenant au moins deux réacteurs reliés l'un derrière l'autre par une liaison fluidique selon les revendications 12 à 15,
selon lequel
le volume de réaction est raccordé à l'une des entrées de l'autre réacteur.
